# EUROPÄISCHE PATENTSCHRIFT

(11) **EP 2 649 334 B1**
(45) Veröffentlichungstag und Bekanntmachung des Hinweises auf die Patenterteilung: **09.09.2015**
(21) Anmeldenummer: 11778917.2
(22) Anmeldetag: 07.11.2011
(51) Int. Cl.: F16C 35/02

(54) **LAGERANORDNUNG MIT EINEM LAGERSCHILD UND EINEM FESTLAGER, INSBESONDERE FÜR EINE DROSSELKLAPPE**
BEARING ARRANGEMENT WITH A BEARING SHIELD AND A FIXED BEARING, IN PARTICULAR FOR A BUTTERFLY VALVE
DISPOSITIF DE PALIER COMPORTANT UN FLASQUE-PALIER ET UN PALIER FIXE, EN PARTICULIER POUR UNE VANNE À PAPILLON

(30) Priorität: 09.12.2010 DE 102010062753
(43) Veröffentlichungstag der Anmeldung: 16.10.2013
(73) Patentinhaber: Robert Bosch GmbH, 70442 Stuttgart (DE)
(72) Erfinder: HERP, Juergen, 77815 Buehl (DE); ASCHOFF, Joerg, 77815 Buehl (DE); DOSTLER, Susanne, 77815 Buehl (DE); EHRHART, Thierry, 67540 Ostwald (DE); ROHRER, Guenter, 77886 Lauf (DE)
(86) Internationale Anmeldenummer: PCT/EP2011/069536
(87) Internationale Veröffentlichungsnummer: WO 2012/076270

(56) Entgegenhaltungen:
- DE-A1- 19 935 469
- DE-A1-102008 040 673
- US-A- 2 794 691
- US-A- 3 733 648

## Beschreibung

### Technisches Gebiet

Die vorliegende Erfindung betrifft eine Lageranordnung mit einem Lagerschild, insbesondere für eine Drosselklappe. Insbesondere betrifft die vorliegende Erfindung Maßnahmen zur einfacheren Herstellung einer Lageranordnung.

### Stand der Technik

Die Gehäuse von elektrischen Kleinmaschinen sind in der Regel aus zwei Teilen zusammen gebaut. So besteht das Gehäuse einer Drosselklappe beispielsweise aus einem in etwa zylinderförmigen hohlen Gehäuse (der sog. Poltopf), der auf einer Seite für die Montage der innen liegenden Bauteile der Drosselklappe geöffnet und auf der gegenüber liegenden Seite geschlossen ist, und aus einem zum Verschließen der Öffnung des Poltopfes notwendigen Lagerschild. Zum Verstellen der Drosselklappe wird ein Elektromotor verwendet, wobei die Flügel der Drosselklappe auf einer Ankerwelle sitzen, welche in axialer Richtung verschiebbar ist und einen Bereich des Motorankers bildet. Die Ankerwelle wird von einer Lageranordnung mit einem Festlager und einem Loslager in dem Poltopf aufgenommen und darin gelagert. Wirken nun während des Betriebs der Drosselklappe externe Kräfte in axialer Richtung der Ankerwelle, so muss die Lageranordnung die zulässige axiale Verschiebung der Ankerwelle im Betrieb begrenzen, so dass sich der Motoranker immer im Bereich des Stators des Elektromotors befindet.

Die Lageranordnung wird mit einem Lagerschild ausgebildet, wobei ein Gleitlager, beispielsweise aus einem Sinterwerkstoff, von zwei diesem gegenüber liegend angeordneten und jeweils angrenzenden Aniaufscheiben fixiert wird. Das Gleitlager wird während der Montage in einen Lagersitz des Lagerschilds eingepresst und muss zusätzlich gegen eine axiale Verschiebung gesichert werden. Hierzu wird eine der beiden Anlaufscheiben mit dem Lagersitz verschweißt, wobei dies meist mittels Laserschweißen erfolgt.

Nachteilig ist hierbei, dass während der Montage die zu verschweißende Anlaufscheibe auf jeweils zwei Seiten mit dem Lagerschild verschweißt werden muss. Zudem erfordert das Laserschweißen eine Änderung der Programmierung des Schweißroboters bzw. der Steuerung der Schweißparameter bei einer Änderung der Gestaltung des Lagerschilds bzw. auch während der Serienfertigung in Abhängigkeit von den aktuellen Werkstoffeigenschaften der beteiligten Schweißpartner. Des Weiteren sind die Investitionskosten für einen Schweißroboter und dessen Programmierung sowie für dessen Wartung recht hoch, was sich unvorteilhaft auf die Bauteilkosten des Lagerschilds auswirkt

Die Druckschrift US 2,794,691 offenbart ein Verfahren zum Herstellen einer Lageranordnung, wobei ein ais Blechformteil ausgebildeter Lagerschild bereitgestellt wird, der in einer radialen Richtung des Lagers ausgerichteten Flanschbereich und einen sich in einer axialen Richtung erstreckenden Lageraufnahmebereich aufweist. Der Lageraufnahmebereich weist eine geneigte oder sphärische Innenfläche auf. Es ist ein erster axialer Anschlag zwischen dem Flanschbereich und dem Lageraufnahmebereich vorgesehen. Das Lager wird im Inneren des Lageraufnahmebereichs angeordnet und anschließend wird ein axialer Anschlag zwischen dem Flanschbereich und dem Lageraufnahmebereich ausgeformt. Durch die sich verjüngende oder sphärische Innenfläche des Flanschbereichs wird das Lager im Inneren des Lageraufnahmebereichs gehalten.

Es ist daher eine Aufgabe der vorliegenden Erfindung, eine Lageranordnung mit einem Festlager, insbesondere für eine Drosselklappe, bereitzustellen, bei dem sich der Aufwand für die Herstellung des Lagerschilds und dessen Herstellungskosten verringern. Weiterhin ist es Aufgabe der vorliegenden Erfindung, ein Verfahren zur Herstellung einer Lageranordnung bereitzustellen.

### Offenbarung der Erfindung

Diese Aufgabe wird durch das Verfahren zum Herstellen einer Lageranordnung nach Anspruch 1 gelöst.

Vorteilhafte Ausgestaltungen und bevorzugte Ausführungsbeispiele der Erfindung sind in den Unteransprüchen angegeben.

Gemäß einem ersten Aspekt ist ein Elektromotor mit einer Lageranordnung für einen Stellgeber, insbesondere für eine Drosselklappe, vorgesehen. Das Herstellungsverfahren der Lageranordnung umfasst:
- das Bereitstellen eines Lager zum Lagern einer Welle;
- eines als ein Blechformteil ausgebildeten Lagerschilds, der einen in radialer Richtung des Lagers ausgerichteten Flanschbereich und einen sich in einer axialen Richtung des Lagers erstreckenden Lageraufnahmebereich aufweist,
wobei zwischen dem Flanschbereich und dem Lageraufnahmebereich ein erster axialer Anschlag für das Lager angeordnet ist,
wobei an einem dem Flanschbereich gegenüberliegenden Ende des Lageraufnahmebereichs ein zweiter axialer Anschlag angeordnet ist,
wobei Lagerschultern des Lagers in dem Lageraufnahmebereich von den axialen Anschlägen gehalten werden.

Die vorliegende Lageranordnung mit einem Festlager, insbesondere für eine Drosselklappe, umfasst einen Lagerschild, welcher ein Blechformteil ist und einen Flanschbereich aufweist, wobei sich an den Flanschbereich ein erster axialer Anschlag für ein Lager anschließt, an den sich wiederum ein Lageraufnahmebereich anschließt, wobei sich an den Lageraufnahmebereich ein zweiter axialer Anschlag anschließt. Des Weiteren wird das Lager in radialer Richtung von dem Lageraufnahmebereich aufgenommen und dessen Lagerschultern sind jeweils von einem der beiden axialen Anschläge zumindest teilweise überdeckt.

Die vorliegende Lageranordnung bietet gegenüber den bekannten Lageranordnungen den Vorteil, dass diese nunmehr vollständig mittels preisgünstigeren Umformverfahren hergestellt werden kann, wodurch der Einsatz des vorstehend beschriebenen aufwändigen und teueren Laserschweißens entfallen kann. Dadurch kann in vorteilhafter Weise der Aufwand für dessen Herstellung gesenkt werden. Des Weiteren kann bei der vorliegenden Lageranordnung die Verwendung der bislang erforderlichen Anlaufscheiben entfallen, wodurch die Kosten für deren Bereitstellung und Montage in der Lageranordnung entfallen.

Der Flanschbereich des vorliegenden Lagerschildes kann eine ebene, flache Gestaltung aufweisen, die im Wesentlichen senkrecht zur Längsachse des Lagerschilds ist. Alternativ dazu kann der Flanschbereich auch eine konische Gestaltung aufweisen.

Das Lager der vorliegenden Lageranordnung kann ein Gleitlager sein, welches bspw. aus einem Sinterwerkstoff, einem großporigen Kunststoff mit Selbstschmierung oder aus einem keramischen Werkstoff besteht. Weiterhin kann das Lager auch ein Rollenlager sein, d.h. insbesondere ein Kugellager oder ein Kegelrollenlager.

Weiterhin kann bei der vorliegenden Lageranordnung der erste axiale Anschlag eine hinterschnittige Gestaltung aufweisen. Dabei wird die hinterschnittige Gestaltungen in Bezug auf die Anordnung des Lageraufnahmebereichs gegenüber dem ersten axialen Anschlag festgelegt, wobei der Lageraufnahmebereich in radialer Richtung weiter von der Längsachse des Lagerschilds als der erste axiale Anschlag beabstandet ist. Vorzugsweise wird der hinterschnittige erste axiale Anschlag mithilfe eines Umformverfahrens bei der Herstellung des Lagerschildes hergestellt. Dadurch entfällt in vorteilhafter Weise der Einsatz eines Fügeverfahrens zur Ausbildung des ersten axialen Anschlags für die Lageranordnung.

Weiterhin kann bei der vorliegenden Lageranordnung der erste axiale Anschlag eine nockenförmige Gestaltung aufweisen. Die Herstellung des nockenförmigen ersten axialen Anschlags kann beispielsweise mittels Anprägen erfolgen. Somit entfällt ebenso in vorteilhafter Weise der Einsatz eines Fügeverfahrens zur Ausbildung des ersten axialen Anschlags für die Lageranordnung.

Weiterhin kann bei der vorliegenden Lageranordnung der zweite axiale Anschlag mittels Radialnieten hergestellt werden. Das Umformverfahren des Radialnietens bietet den Vorteil, dass dabei derjenige Teil des Werkstoffs des Lagerkörpers, welcher sich vor der Ausbildung des zweiten axialen Anschlags in Form eines Stegs von dem Lageraufnahmebereich parallel zu diesem weg erstreckt, durch den Einsatz des Radialnietens derart verformt wird, dass dieser um die Kante des Lagers geformt wird und anschließend mit der zweiten Lagerschulter des Lagers in Kontakt kommt. Dadurch weist das Lager in dem vorliegenden Lagerschild aufgrund seiner formschlüssigen Verbindung, die durch die beiden axialen Anschläge und den Lageraufnahmebereich mit dem Lager gebildet wird, kein axiales Lagerspiel auf. Des Weiteren kann somit in vorteilhafter Weise das bisher verwendete aufwändige Laserschweißen zur axialen Sicherung des Lagers in dem Lagerschild entfallen, wodurch sich die Herstellungskosten verringern.

Weiterhin kann in der vorliegenden Lageranordnung der Lagerkörper als einstückiges Bauteil ausgebildet werden. Dadurch ist es möglich, dass die Herstellung der Lageranordnung einzig durch den Einsatz von Umformverfahren zu realisieren, wodurch die Herstellungszeit verkürzt und die Robustheit des Herstellungsprozesses gegenüber Schwankungen in den Eigenschaften der angelieferten Blechgüten des Lagerschildes zunimmt.

Weiterhin kann in der vorliegenden Lageranordnung die Blechdicke des Flanschbereichs geringer als die Blechdicke des Lageraufnahmebereichs sein. Somit können beispielsweise gezielt unterschiedliche Blechdicken in den beiden genannten Bereichen konstruktiv ausgewählt werden, so dass derjenige Bereich des Lagerkörpers, der mit dem Lager in Kontakt kommt, höhere Anforderungen an die Betriebsfestigkeit und Einsatzdauer als der Flanschbereich erfüllen kann. Dabei kann die Ausgangsplatine zur Herstellung des Lagerschilds beispielsweise eine sog. tailor-welded Platine sein, die jeweils unterschiedliche Ausgangsblechdicken in denjenigen Bereichen aufweist, die durch die späteren Umformverfahren zu dem Flanschbereich und dem Lageraufnahmebereich werden.

### Kurzbeschreibung der Zeichnungen

Bevorzugte Ausführungsformen werden nachfolgend anhand der beigefügten Zeichnungen näher erläutert.
Fig. 1 zeigt eine schematische Schnittansicht eines Bereichs des Lagerschilds mit einem Festlager während der Montage, und
Fig. 2 zeigt eine schematische Schnittansicht des Lagerschilds gemäß Fig. 1 am Ende der Herstellung.

### Beschreibung von Ausführungsformen

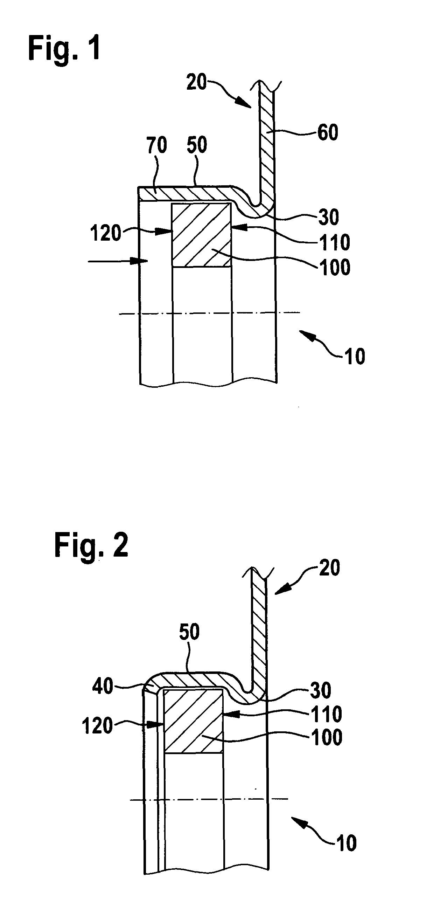

Fig. 1 zeigt eine schematische Schnittansicht eines Abschnitts einer Lageranordnung 10 mit einem Lagerschild 20. Die Lageranordnung 10 umfasst ein ringförmiges Lager 100. Fig. 1 zeigt einen Zustand vor einer Fertigstellung der Lageranordnung 10 während der Montage. Das Lagerschild 20 kann insbesondere für den Einbau in einer Drosselklappe in vorteilhafter Weise verwendet werden.

Das Lagerschild 20 ist als ein Blechformteil ausgebildet, das mit Hilfe eines Tiefziehprozess herstellbar ist. Das Lagerschild 20 weist einen etwa kreisförmigen Flanschbereich 60 auf, welcher sich im Wesentlichen innerhalb einer Ebene in radialer Richtung erstreckt. Etwa mittig in dem Flanschbereich 60 befindet sich eine Wellenöffnung. Der Rand der Wellenöffnung weist einen ersten axialen Anschlag 30 auf, der bezüglich einer axialen Richtung eine hinterschnittige Gestaltung aufweist.

Der erste axiale Anschlag 30 wird ebenfalls mittels Umformen hergestellt. Dabei wird der axiale Anschlag als U-förmig gebogener Abschnitt des Blechformteils ausgebildet, das mit seinem Basisbereich in die Wellenöffnung hineinragt. Der durch den Basisbereich des axialen Anschlags gebildete Innendurchmesser ist kleiner als der Außendurchmesser des Festlagers 100, so dass ein Anschlag in axialer Richtung für das Lager 100 gebildet wird.

Angrenzend an den ersten axialen Anschlag 30 ist ein Lageraufnahmebereich 50 ausgebildet, der sich im Wesentlichen parallel zur axialen Richtung des Lagerschilds bzw. des Lagers 100 erstreckt.

Während der Montage wird das Lager 100 in axialer Richtung des Lagerschilds 20 so weit in den Lageraufnahmebereich 50 eingeschoben bis eine erste Lagerschulter 110 des Lagers 100 mit dem ersten axialen Anschlag 30 in Kontakt kommt. Der äußere Durchmesser des Lagers 100 und der innere Durchmesser des Lageraufnahmebereichs 50 sind derart gewählt, dass ein Schiebesitz gebildet wird. Die Länge des Lageraufnahmebereichs 50 entspricht der Dicke des Lagers 100.

Das Lager 100 ist ein Gleitlager, das aus einem Sinterwerkstoff besteht. Alternativ dazu kann das Gleitlager auch aus jedem bekannten Werkstoff für einen derartigen Verwendungszweck bestehen, beispielsweise aus einem großporigen Kunststoff oder einem keramischen Werkstoff. Auf der der ersten Lagerschulter 110 gegenüberliegenden Seite weist das Lager 100 eine zweite Lagerschulter 120 auf, die in diesem Stadium der Herstellung (Fig. 1) der Lageranordnung 10 noch keinerlei Kontakt mit dem Lagerschild 20 aufweist.

Angrenzend an den Lageraufnahmebereich 50 ist ein Steg 70 ausgebildet, der parallel zum Lageraufnahmebereich 50 verläuft und in einem weiteren Herstellungsschritt des Lagerschilds 20 zu einem zweiten axialen Anschlag 40 für das Lager 100 umgeformt wird, so dass das Lager 100 danach zu einem Festlager wird.

Fig. 2 zeigt eine schematische Schnittansicht der Lageranordnung 10 gemäß Fig. 1 am Ende der Herstellung der Lageranordnung 10. Sobald das Lager 100 sich in der vorstehend beschriebenen Position innerhalb des Lageraufnahmebereichs 50 befindet, wird in einem weiteren Herstellungsschritt der Steg 70 mithilfe eines Umformverfahrens derart verformt, dass aus dem Steg 70 ein zweiter axialer Anschlag 40 gebildet wird, der mit der zweiten Lagerschulter 120 des Lagers 100 in Kontakt kommt und diese so weit überdeckt, dass das Lager 100 in axialer Richtung nicht mehr verschiebbar ist.

Zum Herstellen des zweiten axialen Einschlags 40 wird vorzugsweise das Radialnieten eingesetzt, wodurch während des Verformens des Stegs 70 dessen Material um die Kante zwischen der äußeren Umfangsfläche des Lagers 100 und der zweiten Lagerschulter 120 geformt wird und der Bereich des freien Längsendes des Steges 70 zumindest teilweise mit der zweiten Lagerschulter 120 in Kontakt kommt, was zu hohen axialen Auspresskräften führt.

Weiterhin kann in der vorliegenden Lageranordnung 10 die Blechdicke des Flanschbereichs 60 geringer als die Blechdicke des Lageraufnahmebereichs 50 sein. Somit können beispielsweise gezielt unterschiedliche Blechdicken in den beiden genannten Bereichen konstruktiv ausgewählt werden, so dass derjenige Bereich des Lagerschildes 20, der mit dem Lager 100 in Kontakt kommt, höhere Anforderungen an die Betriebsfestigkeit und Einsatzdauer als der Flanschbereich 60 erfüllen kann.

Der erste axiale Anschlag 30, der Lageaufnahmebereich 50 und der zweite axiale Anschlag 40 weisen dabei jeweils eine rotationssymmetrische Gestaltung auf.

## Patentansprüche

1. Verfahren zum Herstellen eines **Elektromotors mit** einer Lageranordnung (10) für einen Stellgeber, insbesondere für eine Drosselklappe, mit folgenden Schritten:
- Bereitstellen eines als ein Blechformteil ausgebildeten **Elektromotor-**Lagerschilds (20), der einen in einer radialen Richtung des Lagers (100) ausgerichteten Flanschbereich (60) und einen sich in einer axialen Richtung (100) erstreckenden kreiszylindrischen Lageraufnahmebereich (50) aufweist,
- Vorsehen eines ersten axialen Anschlags (30) zwischen dem Flanschbereich (60) und dem Lageraufnahmebereich (50);
- Anordnen eines Lagers (100) im Inneren des Lageraufnahmebereichs (50), so dass das Lager mit einer Lagerschulter (110) an dem ersten axialen Anschlag (30) anliegt;
- Umbiegen eines Abschnitts des Lageraufnahmebereichs (50), um einen zweiten axialen Anschlag (40) zu bilden, so dass der zweite axiale Anschlag (40) eine weitere Lagerschulter (120) in axialer Richtung hält,
wobei der Abschnitt des Lageraufnahmebereichs um die Kante zwischen der äußeren Umfangsfläche des Lagers und der zweiten Lagerschulter geformt wird, wobei **etwa mittig in dem Flanschbereich (60) eine Wellenöffnung ausgebildet wird, deren Rand durch den ersten axialen Anschlag (30) gebildet wird, und die Wellenöffnung zur Aufnahme einer Ankerwelle ausgebildet ist, die** in der **Lageranordnung (10) als Festlager gelagert wird und mit einem Loslager in einem Poltopf des Elektromotors aufgenommen wird.**

2. Verfahren nach Anspruch 1, wobei der erste axiale Anschlag (30) durch das Blechformteil als U-förmige Umbördelung des Blechformteils gebildet wird.

3. Verfahren nach Anspruch 1 und 2, **dadurch gekennzeichnet, dass** der zweite axiale Anschlag (40) mittels Radialnieten hergestellt wird.

4. Verfahren nach Anspruch 1 bis 3, **dadurch gekennzeichnet, dass** das Lagerschild (20) als einstückiges Bauteil ausgebildet wird.

5. Verfahren nach Anspruch 1 bis 4, **dadurch gekennzeichnet, dass** die Blechdicke des Flanschbereichs (60) geringer als die Blechdicke des Lageraufnahmebereichs (50) ausgebildet wird.

6. Verfahren nach Anspruch 1 bis 5, **dadurch gekennzeichnet, dass Flügel einer Drosselklappe auf der Ankerwelle befestigt sind, und die Lageranordnung beim Einwirken externer Kräfte auf die Ankerwelle in axialer Richtung eine zulässige axiale Verschiebung der Ankerwelle im Betrieb begrenzt.**

7. **Verfahren nach Anspruch 1 bis 6, dadurch gekennzeichnet, dass das Lager (100) als Gleitlager ausgebildet wird, das insbesondere aus Sinterwerkstoff oder großporigem Kunststoff oder einem keramischen Werkstoff hergestellt wird.**

## Claims

1. Method for producing an electric motor with a bearing arrangement (10) for an actuator, in particular for a damper flap, having the following steps:
- provision of an electric motor bearing plate (20) which is configured as a shaped sheet-metal part and has a flange region (60) which is oriented in a radial direction of the bearing (100) and a circular-cylindrical bearing seat region (50) which extends in an axial direction (100),
- provision of a first axial stop (30) between the flange region (60) and the bearing seat region (50);
- arranging of a bearing (100) in the interior of the bearing seat region (50), with the result that the bearing bears with a bearing shoulder (110) against the first axial stop (30);
- bending over of a section of the bearing seat region (50), in order to form a second axial stop (40), with the result that the second axial stop (40) holds a further bearing shoulder (120) in the axial direction, the section of the bearing seat region being shaped around the edge between the outer circumferential face of the bearing and the second bearing shoulder, a shaft opening being formed approximately centrally in the flange region (60), the edge of which shaft opening is formed by the first axial stop (30), and the shaft opening being configured to receive an armature shaft which is mounted as a locating bearing in the bearing arrangement (10) and is received with a floating bearing in a pole pot of the electric motor.

2. Method according to Claim 1, the first axial stop (30) being formed by the shaped sheet-metal part as a U-shaped flanged portion of the shaped sheet-metal part.

3. Method according to Claims 1 and 2, **characterized in that** the second axial stop (40) is produced by means of radial rivets.

4. Method according to Claims 1 to 3, **characterized in that** the bearing plate (20) is configured as a single-piece component.

5. Method according to Claims 1 to 4, **characterized in that** the sheet metal thickness of the flange region (60) is configured to be smaller than the sheet metal thickness of the bearing seat region (50).

6. Method according to Claims 1 to 5, **characterized in that** blades of a damper flap are fastened on the armature shaft, and, in the case of external forces acting on the armature shaft in the axial direction, the bearing arrangement limits a permissible axial displacement of the armature shaft during operation.

7. Method according to Claims 1 to 6, **characterized in that** the bearing (100) is configured as a plain bearing which is produced, in particular, from sintered material or large-pored plastic or a ceramic material.

## Revendications

1. Procédé de fabrication d'un moteur électrique avec un dispositif de palier (10) pour un capteur, en particulier pour une vanne à papillon, comprenant les étapes suivantes:
- préparer un flasque (20) de moteur électrique comme pièce de forme en tôle, qui présente une région de bride (60) orientée dans une direction radiale du palier (100) et une région de réception de palier cylindrique ronde (50) s'étendant dans une direction axiale (100),
- prévoir une première butée axiale (30) entre la région de bride (60) et la région de réception de palier (50),
- disposer un palier (100) à l'intérieur de la région de réception de palier (50), de telle manière que le palier s'applique avec un épaulement de palier (110) sur la première butée axiale (30),
- plier une partie de la région de réception de palier (50), afin de former une deuxième butée axiale (40), de telle manière que la deuxième butée axiale (40) retienne un autre épaulement de palier (120) en direction axiale,
dans lequel on façonne la partie de la région de réception de palier autour de l'arête entre la face périphérique extérieure du palier et le deuxième épaulement de palier, dans lequel on forme environ au milieu de la région de bride (60) une ouverture d'arbre, dont le bord est formé par la première butée axiale (30), et l'ouverture d'arbre est configurée pour recevoir un arbre d'induit, qui est monté dans le dispositif de palier (10) en tant que palier fixe et qui est logé avec un palier libre dans une tête polaire du moteur électrique.

2. Procédé selon la revendication 1, dans lequel on forme la première butée axiale (30) par la pièce de forme en tôle sous forme de bord rabattu en forme de U de la pièce de forme en tôle.

3. Procédé selon la revendication 1 ou 2, **caractérisé en ce que** l'on produit la deuxième butée axiale (40) par rivetage radial.

4. Procédé selon l'une quelconque des revendications 1 à 3, **caractérisé en ce que** le flasque de palier (20) est réalisé en tant que composant en une pièce.

5. Procédé selon l'une quelconque des revendications 1 à 4, **caractérisé en ce que** l'épaisseur de tôle de la région de bride (60) est inférieure à l'épaisseur de tôle de la région de réception de palier (50).

6. Procédé selon l'une quelconque des revendications 1 à 5, **caractérisé en ce que** des ailes d'une vanne à papillon sont fixées sur l'arbre d'induit, et le dispositif de palier limite en fonctionnement un déplacement axial autorisé de l'arbre d'induit lors de l'action de forces externes sur l'arbre d'induit en direction axiale.

7. Procédé selon l'une quelconque des revendications 1 à 6, **caractérisé en ce que** le palier (100) est réalisé sous forme de palier lisse, qui est fabriqué en particulier en matériau fritté ou en matière plastique à grands pores ou en un matériau céramique.
